# EUROPEAN PATENT APPLICATION

(11) **EP 1 408 433 A1**
(43) Date of publication of application: **14.04.2004**
(21) Application number: 02022621.3
(22) Date of filing: 09.10.2002
(51) Int. Cl.: G06F 17/60

(54) **Hybrid digital signatures**

(71) Applicant: SAP Aktiengesellschaft, 69190 Walldorf (DE)
(72) Inventor: Dietl, Josef, 69226 Nussloch (DE)

(57) **Abstract**

Computer implemented method for document processing, comprising generating a document in a business processes supporting computer system, generating a validation code associated with the document in the business processes supporting computer system, generating a human readable mark for the validation code, creating a physical document, comprising the human readable mark, wherein generating a human readable mark comprises retrieving a signature image from a repository within the business processes supporting computer system associated with the validation code and generating a control code for the human readable mark.

## Description

The invention relates to a computer-implemented method for document processing.

The method and system can be used within a computer landscape such as an enterprise resource planning system (ERP). Business processes within enterprises are often controlled using computer-implemented systems such as ERP (Enterprise Resource Planning) systems. An example of such an ERP system is the integrated business solution mySAP.com made by SAP AG. Within such a system a number of business processes can be controlled, for example human resources, finance, controlling, purchases, sales, production, and planning. Typically implementations of business processes involve workflows, i.e. sequences of subsequent steps for completing a specific business process.

ERP systems are less efficient however when business processes require contact with external parties that do not have business systems that can communicate directly with an ERP system, such as for example private persons, and small businesses.

It is an object of the invention to provide a method that improves the efficiency of business processes supporting computer systems. To achieve this goal the invention provides for a method according to claim 1. By providing a document with a digital signature using fully computer integrated workflows, that can be recognised and verified by the recipient without the need for direct communication with the originating business processes supporting computer system.

Further embodiments of the invention are the subject of the dependent claims.
Further objects, aspects and advantages of the invention will be better understood from the following detailed description of a preferred embodiment of the invention with reference to the drawing, in which:

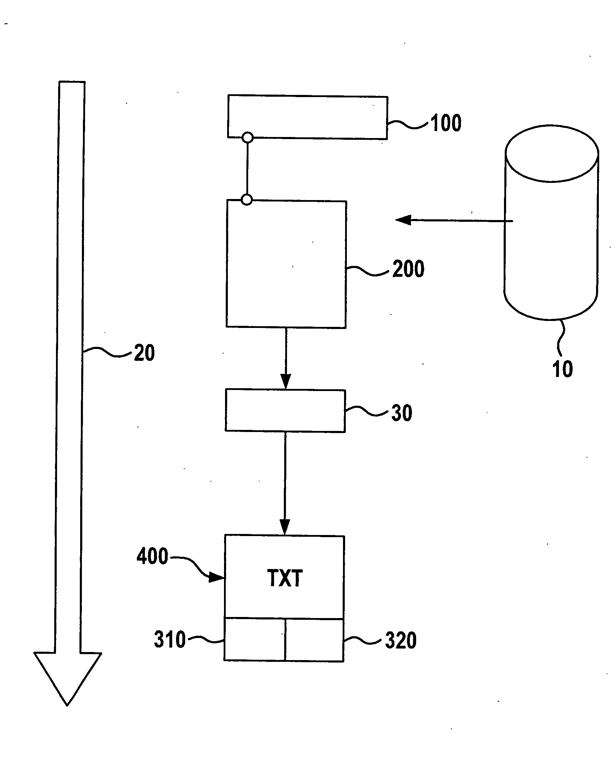

Fig. 1 shows schematically an example of an embodiment of the invention.

Provided is a business processes supporting computer system, embodied in this example as an ERP system 10. Within the ERP system 10 a text file 200 is generated, for example automatic or manually. The text file 200 exists within the ERP system in digital form. The text document 200 can have any required content, for example billing, orders, invoices, contracts, etc. Within the ERP environment, the text file 200 is sent through a workflow system to an approver, authorised to validate the text file 200 for further processing. The approver validates the text file 200 by attaching his personal digital validation code 100 to the text file 200. Methods and systems for digitally validating digitally stored files are known per se, for example using digital signatures and watermarks.

Within the ERP system the now validated text file 200 is guided through the respective workflow, schematically indicated with arrow 20 towards a printing step 30, during which a physical copy of the text file is produced, for example by means of printing. The physical copy or printout 400 comprises the text as contained in the text file 200; further a human readable mark 300 of the validation code. In this example, the human readable mark comprises a signature image 310 (for example a bit map) of the respective approver and a control code 320 such as for example a bar code or a number printed in Arabic numbers. The signature image of the approver is stored in a repository within the ERP system, and is for example retrieved during the printing process.

A human recipient of the document can read the signature image 310 of the approver, and can verify its authenticity using the control code 320. In case the control code is not in a for human readable code, such as for example a two dimensional bar code, the recipient can use a machine reading device, such as for example a bar scanner or OCR scanner, most devices which are readily available.

The control code can for example be generated once for a specific signature or any time again uniquely for a specific document. The control code can be stored in an ERP repository. In case the control code is generated uniquely for each document, the control code can also be used for validating the content of the document.

In one example of an embodiment of the invention, a portal for the ERP system is provided in which the recipient of the document can enter the validation code and retrieve the identity of the approver. Further the recipient can validate the authenticity of the document printed if the control number uniquely identifies the specific document.

In the following example an embodiment of the invention is shown. A workflow for the preparation of a labour contract is given as an example.

In a first step a work contract is prepared as an electronic document by the HR department. In a workflow step within for example an HR module of an ERP system the HR department forwards the electronic contract to the relevant manager for approval. The manager receives in his workflow system the contract in electronic form. After review the manager signs the contract electronically by using a digital signature and sends the now signed electronic document in a workflow step back to the HR department.

In a next workflow step the HR department produces a physical copy of the electronically signed document, for example by printing the contract on paper. The print of the document includes the text of the contract, as well as a printed signature of the manager in human-readable form. Further the digital signature of the manager is printed on the document, for example as a number or bar code that includes the digital signature. The code can be printed for example on the backside of each page of the document).

The HR department sends out the printed contract to a recipient, in this example the future employee for signing. The future employee signs the contract on paper (preferably after checking the validity of the signature using the control number) and sends it back to the HR department. The HR department then confirms the contract as signed and proceeds with the workflow accordingly.

Although the example shown relates to an application within Human Resources, the invention is not limited to this application. The invention can be implemented in any part of a business processes supporting computer system where verifiable physical documents have to be produced, for example in applications and workflows related to for example sales, invoices, reporting, finance, production, and planning.

The invention is not limited to the implementation shown in the example within the context of an ERP system; the invention can be implemented in any computer system or computer landscape that supports the processing of business processes. In a further example of an embodiment of the invention, a computer implemented word processor can be used to generate the text and macros within the word processor can be used to perform the tasks of generating the validation code and the human readable mark.

The invention further relates to a program storage device readable by a computer system, embodying a program of instructions executable by the computer system to perform any method according to the invention. As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. Computer implemented method for document processing, comprising generating a document (200) in a business processes supporting computer system (10) ,
generating a validation code (100) associated with the document in the business processes supporting computer system (10),
generating a human readable mark (300) for said validation code, and
creating a physical document (400), comprising at least said human readable mark (300).

2. Method according to claim 1, wherein generating a human readable mark (300) comprises retrieving a signature image (310) from a repository within said business processes supporting computer system (10) associated with said validation code and generating a control code (320) for said human readable mark (300).

3. Method according any of the preceding claims, wherein the validation code is a digital signature.

4. Method according to any of the preceding claims, wherein said control code comprises a number expressed in Arabic numbers.

5. Method according to any of the preceding claims, wherein said control code comprises a bar code.

6. Program storage device readable by a computer system, embodying a program of instructions executable by the computer system to perform a method according to any of claims 1-5.
